# EUROPÄISCHE PATENTSCHRIFT

(11) **EP 3 036 127 B1**
(45) Veröffentlichungstag und Bekanntmachung des Hinweises auf die Patenterteilung: **19.07.2017**
(21) Anmeldenummer: 14780802.6
(22) Anmeldetag: 25.09.2014
(51) Int. Cl.: B60L 9/18, B60M 5/02, B60L 5/00, B60L 3/00, B60L 11/18

(54) **SCHUTZEINRICHTUNG FÜR EIN FAHRZEUG ZUR VERMEIDUNG VON BERÜHRSPANNUNGEN**
PROTECTION DEVICE FOR A VEHICLE FOR PREVENTING CONTACT VOLTAGES
DISPOSITIF DE PROTECTION DE VÉHICULE DESTINÉ À EMPÊCHER DES TENSIONS DE CONTACT

(30) Priorität: 02.10.2013 DE 102013220095; 18.12.2013 DE 102013226356
(43) Veröffentlichungstag der Anmeldung: 29.06.2016
(73) Patentinhaber: Siemens Aktiengesellschaft, 80333 München (DE); Scania CV AB, 151 87 Södertälje (SE)
(72) Erfinder: BÜHS, Florian, 10777 Berlin (DE); DIETRICH, Klaus, 13051 Berlin (DE); GERSTENBERG, Frank, 10409 Berlin (DE); GRÜNJES, Hasso Georg, 91052 Erlangen (DE); SÄNGER, Göran, 12557 Berlin (DE); LANG, Hans-Peter, 90542 Eckental/Brand (DE); LEHMANN, Michael, 91054 Erlangen (DE); LINDSTRÖM, Johan, S-611 37 Nyköping (SE); STARK, Thomas, 15569 Woltersdorf (DE); THORÉN, Christer, S-129 42 Hägersten (SE)
(86) Internationale Anmeldenummer: PCT/EP2014/070535
(87) Internationale Veröffentlichungsnummer: WO 2015/049161

(56) Entgegenhaltungen:
- EP-A1- 2 340 957
- DE-A1- 3 343 590
- DE-A1-102004 018 521
- DE-A1-102011 084 006
- DE-A1-102011 088 973

## Beschreibung

Die Erfindung bezieht sich auf ein Fahrzeug nach dem Oberbegriff des Patentanspruches 1.

In einem Fahrzeug mit einem rein elektrischen Traktionsantrieb oder mit einem hybrid-elektrischen Traktionsantrieb, bei dem ein Elektromotor beispielsweise mit einem Verbrennungsmotor oder mit einer Brennstoffzelle koppelbar ist, wird der Traktionsantrieb von einem nicht geerdeten Fahrzeugrahmen getragenen. Umfasst das Fahrzeug einen mit dem Traktionsantrieb verbindbaren Stromabnehmer, der zur Einspeisung von Traktionsenergie mit einer Fahrleitung einer geerdeten Fahrleitungsanlage in galvanischen Kontakt bringbar ist, muss das Fahrzeug über ein elektrisches Schutzsystem zur Vermeidung von gefährlichen Berührungsspannungen am Fahrzeugrahmen oder an einem mit diesem leitend verbundenen Fahrzeugaufbau verfügen. Das Schutzsystem muss den Fahrzeugrahmen und Fahrzeugaufbau elektrisch vom mit der Fahrleitung in galvanischem Kontakt stehenden Traktionsantrieb und Stromabnehmer trennen. Versagt das Schutzsystem, können am Fahrzeugrahmen oder am Fahrzeugaufbau gefährliche Berührungsspannungen auftreten, die bei Körperschluss durch eine über Erde mit der Fahrleitungsanlage verbundene Person zu gefährlichen Körperströmen mit Verletzungs- oder gar Todesfolge führen können.

Dies betrifft sowohl dieselelektrisch getriebene Lastkraftwagen, wie sie etwa im Tagebau eingesetzt werden, die nur abschnittsweise galvanisch mit einer Fahrleitungsanlage verbunden sind, als auch Fahrzeuge, wie etwa elektrische Oberleitungsbusse, die dauerhaft galvanisch mit einer Fahrleitungsanlage verbunden sind. Anders als bei schienengebundenen Fahrzeugen, deren Schienenräder eine leitende Verbindung zwischen Fahrzeugrahmen und geerdeten Fahrschienen bilden, sind die Fahrzeugrahmen von Lastkraftwagen und Oberleitungsbussen aufgrund deren gummibereifter Räder nicht geerdet.

Bei Oberleitungsbussen ist es bekannt, das Schutzsystem durch eine doppelte Isolation zu realisieren, deren beide Isolationsschichten kontinuierlich oder regelmäßig technisch überwacht werden. Kommt es zu einem Fehler in einer der Isolationsschichten wird dieser signalisiert und der Fehler kann behoben werden, bevor die zweite Isolationsschicht versagt.

So ist aus der Offenlegungsschrift DE 10 2005 041 511 A1 ein Verfahren zur Erfassung und Überwachung von Isolationsstrecken und Berührungsspannungen in Trolley-Bussen bekannt. Der Trolley-Bus ist an ein geerdetes Oberleitungsnetz anschließbar und besitzt zwischen Chassis und Oberleitung ein mindestens zweistufiges Isolationssystem mit mindestens einer Isolations-Zwischenebene. Mittels einer Chassis-Spannungsmessvorrichtung wird die Differenz zwischen Chassispotenzial und einem Bezugspotenzial gemessen. Der gemessene Chassis-Spannungswert wird mit einem vorgegebenen Wert verglichen und, wenn der Chassis-Spannungswert einen vorgegebenen Wert überschreitet, wird ein Alarmsignal generiert. Mittels einer Zwischen-Spannungsmessvorrichtung wird an mindestens einem Zwischenpunkt der Isolations-Zwischenebene die Differenz zwischen Zwischenpotenzial und Bezugspotenzial gemessen. Die Zwischen-Spannungsmessvorrichtung und/oder die Chassis-Spannungsmessvorrichtung umfassen einen Mikroprozessor, durch welchen der Zwischen-Spannungswert mit einem vorgegebenen Wert verglichen wird, und es wird durch den Mikroprozessor ein Alarmsignal generiert, wenn der Zwischen-Spannungswert einen vorgegebenen Wert überschreitet.

Die Offenlegungsschrift DE 10 2004 018 521 A1 zeigt eine Antriebseinheit für ein fahrdrahtgebundenes Fahrzeug. Sie umfasst wenigstens eine elektrische Antriebsmaschine, einen Stromabnehmer mit wenigstens einem Hin- und Rückleiter, der in einem lösbaren elektrischen Kontakt mit wenigstens zwei im Wesentlichen ortsfesten Fahrdrähten steht, wobei der Rückleiter des Stromabnehmers wenigstens einem Fahrdraht zugeordnet ist, der auf einem erdgebundenen Spannungspotential liegt.

Die Antriebseinheit umfasst ferner spannungstragende Teile, die zwischen dem Stromabnehmer und der elektrischen Antriebsmaschine und/oder im Inneren der elektrischen Antriebsmaschine angeordnet sind. Die elektrische Isolation der spannungstragenden Teile ist wenigstens in Teilbereichen als doppelte Isolation ausgebildet und umfasst eine erste elektrische Isolation, eine zweite elektrische Isolation und eine elektrisch leitfähige Zwischenschicht zwischen der ersten elektrischen Isolation und der zweiten elektrischen Isolation.

Der Entwurf der Deutschen Norm DIN EN 50153 (VDE 0115-2) über Bahnanwendungen - Fahrzeuge - Schutzmaßnahmen in Bezug auf elektrische Gefahren von 2012 fordert in Kapitel 5 Schutzmaßnahmen gegen direktes Berühren. Aktive Teile, die einen elektrischen Schlag verursachen können, sind demnach gegen direktes Berühren zu schützen. Alle Arten von Betriebsmitteln müssen so betrieben werden können, dass der Schutz gegen direktes Berühren nicht verloren geht. Der Schutz gegen direktes Berühren muss mindestens durch Isolierung oder durch Verhinderung des Zugangs erfolgen. Zusätzlich zu den Anforderungen von EN 50124-1 müssen Isolierstoffe, die für die Abdeckung von aktiven Teilen verwendet werden, für die Effektivbetriebsspannung und die Einsatzbedingungen des Betriebsmittels geeignet sein. Weitere Vorkehrungen sollten in Betracht gezogen werden, um die Auswirkungen von Beschädigungen so gering wie möglich zu halten.

Die doppelte Isolation erfordert jedoch den elektrisch doppelt isolierten Einbau des gesamten Antriebsstrangs. Diese Art von Schutzsystem ist für dieselelektrische Hybridfahrzeuge, vor allem in der sogenannten parallelen Ausführung, sehr aufwendig, da hier zusätzlich der tief in das Fahrzeug integrierte dieselmechanische Antriebsstrang, bestehend aus Verbrennungsmotor, Getriebe und Kardanwelle, vorhanden ist.

Die Offenlegungsschrift DE 10 2011 088 973 A1 offenbart ein Verfahren zum Steuern einer Spannungsgrenze für eine maximal zulässige Betriebsspannung in einem Bordnetz eines Fahrzeuges, mit einer Anpassungsvorrichtung zum Anpassen der Spannungsgrenze in Abhängigkeit von Fahrzeugdaten. Dadurch können je nach Fahrzeugsituation und -bedingung unterschiedliche Spannungsobergrenzen für die Spannung in einem Bordnetz festgelegt werden und so die im Bordnetz verfügbare Spannung zu jedem Zeitpunkt effizient gespeichert und verwendet werden. Beispielsweise kann die Spannungsgrenze in Abhängigkeit der Geschwindigkeit oder Beschleunigung des Fahrzeugs angepasst werden. Weiter können die Fahrzeugdaten Daten über die Aktivierung oder eine Deaktivierung eines Bremssystems sein, beispielsweise beim Betätigen eines Bremspedals. Außerdem können die Fahrzeugdaten Daten über den Verriegelungs- oder Schließzustand bestimmter Teile des Fahrzeugs sein, wie beispielsweise einer Motorhaube oder einer Batterieabdeckung.

Aus der Offenlegungsschrift DE 10 2006 015 085 A1 ist eine Vorrichtung zur Aufnahme und Übertragung von elektrischer Energie von einem Stromabnehmer zu wenigstens einem im Inneren eines Triebschienenfahrzeugs oder Triebschienenfahrzeugzuges angeordneten Energiewandler, wie einem elektrischen Fahrmotor, einem Transformator, einem elektrischen Drucklufterzeuger, einer elektrischen Klimaanlage oder ähnlichem, bekannt. Sie beinhaltet als Elemente wenigstens einen Spannungswandler, einen Hauptschalter, eine Hauptschaltersteuerung, einen Energiezähler und einen Stromwandler. Es ist vorgesehen, dass der Spannungswandler, der Hauptschalter, die Hauptschaltersteuerung, der Energiezähler und der Stromwandler durch Integration in einem gemeinsamen Gehäuse, durch Aneinanderflanschen ihrer Gehäuse oder durch Integration wenigstens einiger Elemente in dem gemeinsamen Gehäuse und Anflanschen der restlichen Elemente an dem gemeinsamen Gehäuse gegebenenfalls zusammen mit einem Dachteil zu einer vorfertigbaren Baueinheit oder zu einem vorfertigbaren Modul zusammengefasst sind.

Aus der Offenlegungsschrift DE 33 43 590 A1 ist ein gummibereiftes Fahrzeug bekannt, welches mittels eines Stromabnehmers Betriebsstrom für einen Elektromotor aus zwei Oberleitungsfahrdrähten bezieht. Am Fahrzeug ist ein Spannungsmesser zur laufenden Messung der Spannungspotenzialdifferenz zwischen einem gegenüber Erde isolierten Fahrzeugaufbau und einem flexiblen Schleifband, welches elektrisch isoliert am Fahrzeugaufbau befestigt ist und mit seinem anderen Ende auf der Fahrbahnoberfläche schleift, angeordnet. Dem Spannungsmesser nachgeschaltet ist ein Komparator, der den gemessenen Wert für die Spannungsdifferenz mit einem festgelegten Schwellwert vergleicht. Falls ein stromführender Fahrdrahtabschnitt aufgrund eines Bruchs oder eines zu starken Durchhangs mit dem Fahrzeugaufbau in Berührung kommt, steht dieser für die Dauer des Kontakts unter lebensgefährlicher Spannung, was zu einer Überschreitung des Schwellwertes führt. In diesem Fall aktiviert der Komparator selbsttätig einen Sender, der ein Abschaltsignal an einen räumlich entfernten Empfänger in einer zentralen Stelle, beispielsweise einer Trafostation, aussendet. Dem Empfänger ist ein Schalter zugeordnet, der in den Verlauf des Fahrdrahtes zur Stromunterbrechung eingebracht ist. Wird an den Empfänger das Abschaltsignal übertragen, so wird an einer zweckmäßigen Stelle des Oberleitungsnetzes der Schalter geöffnet, so dass der Leiterabschnitt, mit dem der Fahrzeugaufbau in Kontakt steht, stromlos gesetzt wird.

Bekannt ist es auch, Fahrzeuge nur in einem abgeschlossenen und öffentlich nicht zugänglichen Fahrbereich, etwa in einem Tagebauareal, fahren zu lassen, in dem die Fahrleitungsanlage installiert ist. Bei den Fahrern dieser Fahrzeuge handelt es sich um in die Fahrleitungsanlage eingewiesene Personen. Diese Fahrzeuge weisen ein Schutzsystem mit lediglich einfacher Isolierung des elektrischen Antriebssystems auf. Da sich im Fahrbereich der Fahrzeuge mit Verbindung zur geerdeten Fahrleitungsanlage keine Personen aufhalten und sich der Fahrer bei der Fahrt auf dem Fahrzeug befindet, entsteht bei einem Isolationsfehler des elektrischen Antriebssystems keine Personengefährdung. Sobald das Fahrzeug innerhalb des Fahrbereichs zum Stehen kommt, wird die Verbindung zur Fahrleitungsanlage unterbrochen, beispielsweise durch Absenken des Stromabnehmers von der Oberleitung. Somit besteht wiederum keine Personengefährdung.

Der Erfindung liegt die Aufgabe zugrunde, ein Fahrzeug der eingangs genannten Art bereitzustellen, dessen Schutzsystem in allen Betriebszuständen des Fahrzeugs ausreichend Sicherheit bietet, sich aber auch mit wirtschaftlich vertretbarem Aufwand in das Fahrzeug integrieren lässt.

Die Aufgabe wird erfindungsgemäß gelöst durch ein gattungsgemäßes Fahrzeug mit den im kennzeichnenden Teil des Patentanspruches 1 angegebenen Merkmalen. Demnach weist das Schutzsystem eine zweite Schutzstufe, die durch eine elektrisch einfach isolierte Montage wenigstens des Traktionsantriebes am Fahrzeugrahmen gebildet ist, und eine erste Schutzstufe, die zusätzlich durch einen zwischen Stromabnehmer und Traktionsantrieb geschalteten, galvanisch trennenden Gleichspannungswandler gebildet ist, sowie ein Schaltelement auf, mittels dessen das Schutzsystem durch wahlweises Zuschalten oder Überbrücken des Gleichspannungswandlers zwischen der ersten und der zweiten Schutzstufe umschaltbar ist. Dabei bietet die erste Schutzstufe eine höhere Sicherheit vor gefährlichen Berührungsspannungen als die zweite Schutzstufe. Dabei ist der Traktionsantrieb in beiden Schutzstufen mit Traktionsenergie aus der Fahrleitung versorgbar. Der Erfindungskern liegt in der Erkenntnis, dass das Schutzsystem in unterschiedlichen Betriebszuständen des Fahrzeugs, die durch unterschiedliche mögliche Wechselwirkungen zwischen Personen und Fahrzeug charakterisiert sind, unterschiedlichen Sicherheitsanforderungen genügen muss. In einem ersten Betriebszustand - beispielsweise bei Stillstand des Fahrzeugs - ist es für einen Fahrer oder einen Dritten möglich, Fahrzeugrahmen oder Fahrzeugaufbau von außen zu berühren, ohne gleichzeitig Verletzungen aufgrund mechanischer Gewalteinwirkung zu riskieren; das Risiko einer Verletzung durch Köperströme überwiegt in diesem Betriebszustand. In einem zweiten Betriebszustand - beispielsweise bei hoher Fahrgeschwindigkeit des Fahrzeugs - ist es für Dritte fast unmöglich, Fahrzeugrahmen oder Fahrzeugaufbau von außen zu berühren, ohne dabei Verletzungen durch eine Kollision mit dem Fahrzeug zu riskieren. Die zweite Schutzmaßnahme ist kostengünstig umsetzbar und genügt den im Betrieb des Fahrzeugs an die zweite Schutzstufe gestellten Sicherheitsanforderungen. Sie ist für den Betrieb des Fahrzeugs bei höheren Fahrgeschwindigkeiten vorgesehen. Teilweise können ausgewählte Bereiche zwischen Traktionsantrieb und Fahrzeugrahmen auch doppelt isoliert sein. Der Gleichspannungswandler weist eine im Vergleich zur vollen Nennleistung des Traktionsantriebs geringe Nennleistung auf und wird verwendet, um bei geringer Fahrgeschwindigkeit den elektrischen Traktionsantrieb zu versorgen. Die erste Schutzstufe dient dem Anfahren und Fahren bei geringen Fahrgeschwindigkeiten. In diesem Betriebszustand wird der Traktionsantrieb optional durch einen Verbrennungsmotor oder andere fahrzeugseitige Energiequellen unterstützt. Bei höheren Fahrgeschwindigkeiten wird der galvanisch trennende Gleichspannungswandler durch einen Schaltzweig überbrückt und die Traktionsenergie wird direkt aus der Fahrleitung entnommen. Die einfach isolierten Komponenten des Antriebssystems sind in dieser zweiten Schutzstufe des Schutzsystems nicht mehr durch eine galvanische Trennung von der Fahrleitungsanlage beziehungsweise vom gegebenenfalls doppelt isolierten Bereich getrennt. Ein Schutzsystem mit zwei Schutzstufen lässt sich, insbesondere im Vergleich zu einem komplett doppelt isolierten Einbau des Traktionsantriebes im Fahrzeugrahmen, mit geringerem Aufwand realisieren. Durch die technische Möglichkeit des Umschaltens des Schutzsystems zwischen zwei Schutzstufen mit unterschiedlichen Sicherheiten vor Berührungsspannungen kann ein sicherer Betrieb des Fahrzeugs gewährleistet werden, indem in jedem Betriebszustand genau die Schutzstufe wirksam ist, die in dem Betriebszustand genügt und diesem daher zugeordnet ist. Analog können auch drei oder mehr Schutzstufen des Schutzsystems vorgesehen sein, wenn mehr als zwei Betriebszustände unterschieden werden sollen.

In einer vorteilhaften Ausführungsform des erfindungsgemäßen Fahrzeugs weist das Schutzsystem eine Sensoreinrichtung zur Erfassung eines Betriebszustands des Fahrzeugs sowie eine mit der Sensoreinrichtung und dem Schaltelement zusammenwirkende Steuereinrichtung auf, die dazu ausgebildet ist, das Schaltelement automatisch in Abhängigkeit des erfassten Betriebszustandes zu betätigen. Die Sicherheit beim Betrieb des erfindungsgemäßen Fahrzeugs wird durch die automatisierte Erfassung des Betriebszustandes und Schaltung der zugeordneten Schutzstufe weiter erhöht.

In einer bevorzugten Ausgestaltung des erfindungsgemäßen Fahrzeugs weist die Sensoreinrichtung ein Geschwindigkeitsmessgerät zur Erfassung der Fahrgeschwindigkeit des Fahrzeugs auf, wobei ein der ersten Schutzstufe zugeordneter, erster Betriebszustand durch Fahrgeschwindigkeiten bis zu einem vorgebbaren Schwellenwert, während ein der zweiten Schutzstufe zugeordneter, zweiter Betriebszustand durch Fahrgeschwindigkeiten ab dem Schwellwert definiert ist. Zur Bestimmung des Betriebszustandes kann ein Schwellenwert für die Fahrgeschwindigkeit, beispielsweise 5 km/h oder 10 km/h oder 15 km/h, vorgegeben werden. Steht das Fahrzeug still oder bewegt es sich mit einer Geschwindigkeit unterhalb des Schwellenwertes, so wird das Schutzsystem in die erste Schutzstufe mit höherer elektrischer Sicherheit geschaltet, da hier die Folgen einer Körperstromverletzung gravierender sind als die einer Körperkollisionsverletzung. Wird der Schwellenwert überschritten, kann das Schutzsystem in die zweite Schutzstufe geschaltet werden, da in diesem Betriebszustand bereits ein Kollisionsunfall einen enormen Personenschaden zur Folge haben dürfte.

In einer weiteren bevorzugten Ausgestaltung des erfindungsgemäßen Fahrzeugs weist die Sensoreinrichtung ein Strommessgerät zur Erfassung der Stromstärke eines sich bei Energieeinspeisung aus der Fahrleitung ausbildenden Fahrstromes auf, wobei ein der ersten Schutzstufe zugeordneter, erster Betriebszustand durch Fahrströme bis zu einem vorgebbaren Schwellenwert, während ein der zweiten Schutzstufe zugeordneter, zweiter Betriebszustand durch Fahrströme ab dem Schwellenwert definiert ist. Der Betriebszustand kann alternativ oder in Kombination zu dem oben Genannten durch einen Schwellenwert für den bezogenen Fahrstrom oder die eingespeiste Traktionsleistung bestimmt werden. Eine Umschaltung des Schutzsystems von der ersten in die zweite Schutzstufe aufgrund einer Überschreitung der Fahrstromstärke kann beispielsweise bei Anfahren des Fahrzeugs vorteilhaft sein. Man kann davon ausgehen, dass der Fahrer des Fahrzeugs dann beschleunigt, wenn dies die Umgebungssituation erlaubt, er also insbesondere keine Personen außerhalb des Fahrzeugs mit Berührungsgefährdung erkennt. Diese Beschleunigung des Fahrzeugs erkennt das Strommessgerät, wenn der bezogene Fahrstrom den Schwellenwert überschreitet.

In einer vorteilhaften Ausgestaltung des erfindungsgemäßen Fahrzeugs weist die Sensoreinrichtung einen Türschließsensor zur Erfassung des Schließzustandes einer Fahrzeugtür und/oder einen Sitzbelegungssensor zur Erfassung des Belegungszustandes eines Fahrzeugsitzes und/oder einen Gurtschließsensor zur Erfassung des Schließzustandes eines Sicherheitsgurtes des Fahrzeugsitzes auf, wobei in Abgrenzung eines der ersten Schutzstufe zugeordneten, ersten Betriebszustandes ein der zweiten Schutzstufe zugeordneter, zweiter Betriebszustand durch eine von innen geschlossene Fahrzeugtür und/oder einen belegten Fahrzeugsitz und/oder einen geschlossenen Sicherheitsgurt des Fahrersitzes definiert ist. Alternativ oder in Kombination zu dem oben Genannten kann der Betriebszustand durch ein sensoriell erfassbares Verhalten von Fahrer und Mitfahrern des Fahrzeugs bestimmt werden. So kann ein Umschalten von einer ersten zu einer zweiten Schutzstufe dadurch ausgelöst werden, wenn die Sensoreinrichtung festgestellt hat, dass Fahrzeugtüren von innen verschlossen wurden, dass Fahrzeugsitze belegt wurden und dass Sicherheitsgurte der Fahrzeugsitze geschlossen wurden. Unabhängig von der Fahrgeschwindigkeit oder dem Fahrstrom kann daraus geschlossen werden, dass das Risiko einer Fahrzeugberührung von außen für Fahrer beziehungsweise Mitfahrer geringer oder ganz verschwunden ist. Umgekehrt wird das Schutzsystem in die erste Schutzstufe zurückgeschaltet, sobald beispielsweise eine Fahrzeugtür geöffnet wurde. Die hier geschilderten Betriebszustandsänderungen, die zu einem Umschalten des Schutzsystems führen, sind besonders bei Fahrten in abgegrenzten Fahrbereichen angezeigt, zu denen keine ungeschulten Fremdpersonen Zutritt haben.

In einer bevorzugten Ausführungsform des erfindungsgemäßen Fahrzeugs ist das Schaltelement mittels eines fahrzeugseitigen Bedienelementes manuell betätigbar und/oder mittels einer Kommunikationseinrichtung zur drahtlosen Datenübertragung und einer mit dieser zusammenwirkenden Bedieneinrichtung fernbetätigbar. Hierdurch wird dem Fahrer oder einer Bedienperson in einer Überwachungszentrale der Fahrleitungsanlage die Möglichkeit einer aktiven Betätigung des Schaltelementes ermöglicht. Hierdurch können Fehlschaltungen, die automatisch erfolgten, korrigiert werden. Außerdem kann das Schutzsystem geschaltet werden, wenn das Fahrzeug von einem öffentlichen Fahrbereich in ein nichtöffentlichen Fahrbereich, in dem durch Unterweisung oder andere technische Maßnahmen ein Berühren von mit der Fahrleitungsanlage in Kontakt befindlichen Fahrzeugen von außen durch Dritte ausgeschlossen ist, wechselt.

Vorzugsweise umfasst das erfindungsgemäße Fahrzeug einen elektrischen Energiespeicher zur Traktionsversorgung des Traktionsantriebs, wobei der Energiespeicher bei zugeschaltetem Gleichspannungswandler aus der Fahrleitung aufladbar ist. Der Gleichspannungswandler wird im der ersten Schutzstufe zugeordneten ersten Betriebszustand verwendet, um den Energiespeicher des Fahrzeugs, beispielsweise eine Akkumulator- oder Kondensatorbatterie, zu laden. Darüber hinaus wird der Gleichspannungswandler im ersten Betriebszustand verwendet, um bei geringer Fahrgeschwindigkeit zu fahren. Zusätzlich kann Energie aus dem Energiespeicher oder dem Verbrennungsmotor des Fahrzeugs verwendet werden. Bei Wechsel in einen zweiten Betriebszustand, beispielsweise bei höheren Fahrgeschwindigkeiten, wird der galvanisch trennende Gleichspannungswandler überbrückt und die Traktionsenergie wird direkt aus der Fahrleitung entnommen. Auch in diesem zweiten Betriebszustand steht die im Energiespeicher vorhandene Energie als Traktionsenergie zur Verfügung. Der Gleichspannungswandler stabilisiert in beiden Betriebszuständen die Energieeinspeisung für den Energiespeicher.

In einer weiteren vorteilhaften Ausgestaltung umfasst das erfindungsgemäße Fahrzeug eine Überwachungseinrichtung zur Erfassung und Signalisierung von Isolationsfehlern in der Isolation zwischen Traktionsantrieb und Fahrzeugrahmen. Zur weiteren Erhöhung der Betriebssicherheit erfindungsgemäßer Fahrzeuge wird die einfache beziehungsweise doppelte Isolierung auf Fehler überwacht. Wird ein Isolationsfehler signalisiert, können umgehend Maßnahmen abgeleitet werden, beispielsweise kann der Fahrer angewiesen werden, das Fahrzeug in eine Werkstatt zu fahren.

In einer weiteren vorteilhaften Ausführungsform des erfindungsgemäßen Fahrzeugs weist das Schaltelement eine neutrale Mittelstellung aufweist, in der weder die erste noch die zweite Schutzstufe des Schutzsystems geschaltet ist. In dieser Mittelstellung können Isolationsfehler auf der Seite des Antriebssystems aufgefunden werden. Außerdem dient die Mittelstellung des Schaltelements dazu, das Spannungsniveau auf der Antriebssystemseite an das der Fahrleitung anzupassen, um einen Spannungssprung bei Schalten des Schaltelements in die erste oder zweite Schutzstufe zu verhindern.

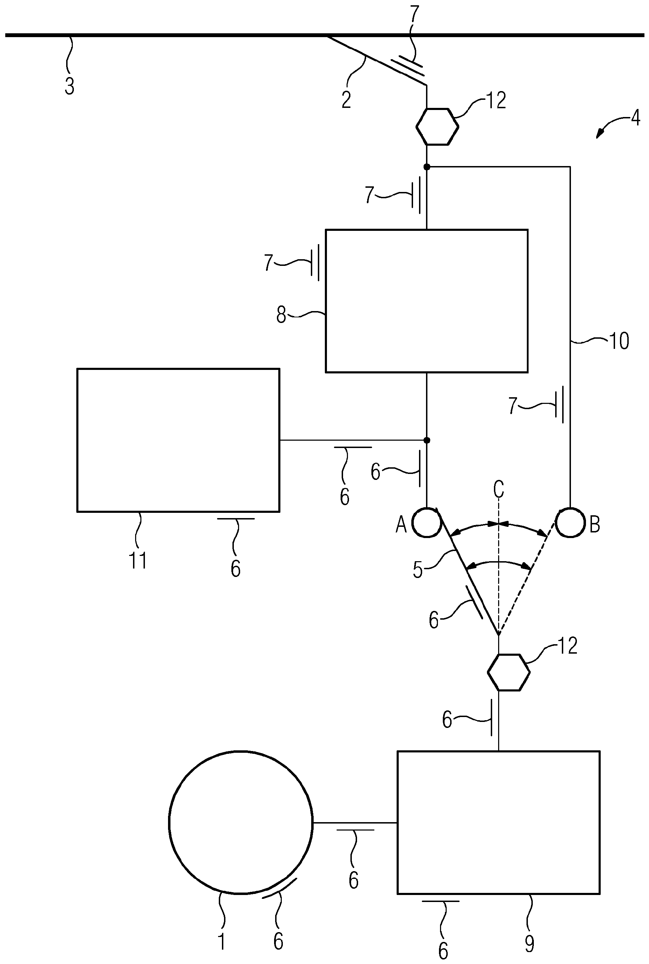

Weitere Eigenschaften und Vorteile der Erfindung ergeben sich aus nachfolgender Beschreibung eines Ausführungsbeispiels anhand der Zeichnung, in deren einziger Figur ein Schaltschema eines erfindungsgemäßen Fahrzeugs mit Schutzsystem veranschaulicht ist.

In der Figur nicht dargestellt sind an sich bekannte Teile eines Fahrzeugs, beispielsweise eines schweren Nutzfahrzeuges, wie etwa ein Fahrzeugrahmen, der Radachsen mit gummibereiften Rädern, eine Fahrerkabine mit Fahrzeugtüren, Fahrzeugsitzen und Sicherheitsgurten sowie einen Fahrzeugaufbau zum Transport von Gütern trägt. Der Fahrzeugrahmen trägt ferner einen Traktionsantrieb 1, der rein elektrisch oder hybrid-elektrisch ausgebildet ist und dessen Drehmoment über Getriebe auf Räder übertragbar ist. Für Streckenabschnitte mit einer Fahrleitungsanlage, beispielsweise einer zweipoligen Oberleitungsanlage, deren Fahrleitung 3 zwei über der Fahrbahn hängende und als Hin- und Rückleiter ausgebildete Fahrdrähte aufweist, umfasst das Fahrzeug einen Stromabnehmer 2 zur externen Einspeisung von Traktionsenergie. Der Stromabnehmer 2 weist ein anheb- und absenkbares Gestell auf, welches eine Wippe mit Schleifleisten trägt. Mittels der Schleifleisten wird ein galvanischer Kontakt zwischen Stromabnehmer 2 und Fahrleitung 3 hergestellt, um Traktionsenergie in das Fahrzeug einzuspeisen oder um Bremsenergie in die Fahrleitung rückzuspeisen. Das Gestell des Stromabnehmers 2 ist ferner quer zur Fahrtrichtung des Fahrzeugs nachstellbar, so dass beispielsweise seitliche Fahrungenauigkeiten ausgeregelt werden können, um im Betrieb stets einen sicheren Kontakt zwischen Stromabnehmer und Fahrleitung zu gewährleisten. Bei unterbrochenem galvanischen Kontakt zwischen Stromabnehmer 2 und Fahrleitung 3 oder auf Streckenabschnitten ohne Fahrleitungsanlage kann der dieselelektrische Traktionsantrieb 1 über ein Dieselaggregat oder aus einem optionalen Energiespeicher 11 des Fahrzeugs, beispielsweise elektrischen Doppelschichtkondensatoren und/oder Batterien, etwa Nickel**Metall-**Hydrid**-Batterien,** mit Traktionsenergie versorgt werden.

Das Fahrzeug weist ein elektrisches Schutzsystem 4 zur Vermeidung von gefährlichen Berührungsspannungen am Fahrzeugrahmen oder an damit leitend verbundenen Fahrzeugteilen, etwa einer Fahrerkabine oder einem Fahrzeugaufbau zum Transport von Gütern, auf. Aufgrund des isolierten Aufstandes des Fahrzeugs auf Erde über gummibereifte Räder ist der Fahrzeugrahmen nicht geerdet. Damit es bei hergestelltem galvanischen Kontakt zwischen der Fahrleitung 3 der geerdeten Fahrleitungsanlage und dem Stromabnehmer 2 und damit dem Traktionsantrieb 1 nicht zu gefährlichen Berührungsspannungen am Fahrzeugrahmen kommen kann, muss das Schutzsystem 4 eine elektrische Trennung beziehungsweise Isolation zwischen den leitend mit Stromabnehmer 2 und Traktionsantrieb 1 verbindbaren Fahrzeugteilen und den leitend mit dem Fahrzeugrahmen verbundenen Fahrzeugteilen. Bei einem Versagen des Schutzsystems 4 kann es bei einem Körperschluss zwischen Fahrzeugrahmen und Erde durch eine auf Erde stehende und das Fahrzeug von außen berührende Person zu lebensbedrohenden Körperströmen kommen. Erfindungsgemäß weist das Schutzsystem 4 eine erste Schutzstufe A und eine zweite Schutzstufe B sowie ein Schaltelement 5 auf, mittels dessen das Schutzsystem 4 zwischen der ersten Schutzstufe A und der zweiten Schutzstufe B umschaltbar ist. Dabei bietet die erste Schutzstufe A eine höhere elektrische Sicherheit vor gefährlichen Berührungsspannungen als die zweite Schutzstufe B.

Die zweite Schutzstufe B des Schutzsystems 4 ist durch eine elektrisch einfach isolierte Montage des Traktionsantriebes 1 am Fahrzeugrahmen gebildet. Zu dem Bereich mit einfacher Isolationsschicht 6 gehören neben dem Traktionsantrieb 1 der Energiespeicher 11, das Schaltelement 5 sowie ein dem Traktionsantrieb 1 vorgeschalteter Wechselrichter 9 zur Umwandlung von Gleichstrom in Wechselstrom. Die erste Schutzstufe A des Schutzsystems 4 ist zusätzlich zur einfachen Isolation durch einen zwischen Stromabnehmer 2 und Traktionsantrieb 1 geschalteten, galvanisch trennenden Gleichspannungswandler 8 gebildet, der mittels des Schaltelementes 5 wahlweise zuschaltbar oder mittels eines parallelen Überbrückungsleiters 10 überbrückbar ist. Stromabnehmer 2, Gleichspannungswandler 8 und Überbrückungsleiter 10 gehören zu einem Bereich mit doppelter Isolationsschicht 7.

In der Schutzstufe A sind alle mit der Fahrleitung 3 elektrisch verbundenen Fahrzeugteile zweifach gegen den Fahrzeugrahmen isoliert, entweder durch eine isolierte Montage oder durch eine galvanische Trennung. Die zweifache Isolation wird durch geeignete Überwachungseinrichtung 12 kontinuierlich überwacht. In der zweiten Schutzstufe B sind einige oder alle mit der Fahrleitung 3 elektrisch verbundenen Fahrzeugteile gegen den Fahrzeugrahmen einfach isoliert. Auch diese Isolation kann durch Überwachungseinrichtungen 12 überwacht werden.

Das Schutzsystem 4 wird nun in Abhängigkeit des Betriebszustandes des Fahrzeugs geschaltet, wobei die erste Schutzstufe A einem ersten Betriebszustand und die zweite Schutzstufe B einem zweiten Betriebszustand zugeordnet sind. Der erste Betriebszustand ist dadurch bestimmt, dass es für den Fahrer oder für einen außenstehenden Dritten möglich ist, das Fahrzeug von außen zu berühren, ohne gleichzeitig andere Gefährdungen mit hohem Schadensausmaß zu riskieren. Der zweite Betriebszustand ist dadurch bestimmt, dass es für außenstehende Dritte nicht möglich oder fast unmöglich ist, das Fahrzeug von außen zu berühren, ohne dabei gleichzeitig schwere mechanische Schäden beziehungsweise einen Unfall mit Personenschaden herbeizuführen oder mit hoher Eintrittswahrscheinlichkeit zu riskieren. Weitere Unterscheidungen von Betriebszuständen und zugeordneten Schutzstufen des Schutzsystems 4 können analog implementiert werden.

Eine Unterscheidung der Betriebszustände ist beispielsweise durch die Höhe der Fahrgeschwindigkeit des Fahrzeugs oder der Höhe der Stromstärke des sich bei Einspeisung von Traktionsenergie ausbildenden Fahrstromes möglich. Der im Fahrzeug verbaute, galvanisch trennende Gleichspannungswandler wird verwendet, um bei geringen Fahrgeschwindigkeiten den Traktionsantrieb 1 zu versorgen. Dabei ist das Schutzsystem 4 in Schutzstufe A geschaltet, die dem Anfahren und Fahren bei geringen Fahrgeschwindigkeiten dient. Hierdurch kann ein Gleichspannungswandler 8 mit vergleichsweise geringer Nennleistung eingesetzt werden. Bei höheren Fahrgeschwindigkeiten wird das Schutzsystem 4 in Schutzstufe B geschaltet, indem der galvanisch trennende Gleichspannungswandler 8 durch einen Überbrückungsleiter 10 überbrückt und die Traktionsenergie direkt aus der Fahrleitung 3 entnommen wird. Die Fahrzeugteile mit einfacher Isolationsschicht 6 sind nun nicht mehr durch eine galvanische Trennung vom Bereich doppelter Isolationsschicht 7 sowie der externen Fahrleitung 3 getrennt.

Im Falle, dass das Fahrzeug über den optionalen Energiespeicher 11 verfügt, wird der Gleichspannungswandler 8 bei geschalteter Schutzstufe A verwendet, um den Energiespeicher 11 zu laden. Darüber hinaus wird der Gleichspannungswandler 8 verwendet, um bei geringer Fahrgeschwindigkeit zu fahren. Zusätzlich kann Traktionsenergie aus dem Energiespeicher 11 oder dem Dieselaggregat des Fahrzeugs verwendet werden. Auch bei höheren Fahrgeschwindigkeiten nach Umschaltung in Schutzstufe B, wo Traktionsenergie vornehmlich direkt aus der Fahrleitung 3 entnommen wird, steht die im Energiespeicher 11 vorhandene Energie als Traktionsenergie zur Verfügung. Der Gleichspannungswandler 8 stabilisiert in beiden Schutzstufen A und B die Energieeinspeisung für den Energiespeicher 11.

Die Betriebszustände des Fahrzeugs können auf Grundlage der durch ein Geschwindigkeitsmessgerät und/oder ein Strommessgerät erfassbaren Fahrgeschwindigkeiten beziehungsweise Fahrströmen bestimmt werden und alternativ dazu oder in Kombination damit durch einen Schließzustand einer Fahrzeugtür und/oder durch einen Belegungszustand eines Fahrzeugsitzes und/oder durch einen Schließzustand eines Sicherheitsgurtes eines Fahrzeugsitzes. So kann eine Umschaltung des Schutzsystems 4 von Schutzstufe A in Schutzstufe B bei Schließung der Fahrzeugtüren von innen oder bei Belegung der Fahrzeugsitze und Schließen deren Sicherheitsgurte von Fahrer und Beifahrer ausgelöst werden. Eine Rückschaltung kann bei Öffnung der Fahrertür unabhängig von der Fahrgeschwindigkeit erfolgen.

Neben der genannten automatischen Umschaltung, die durch eine mit dem Schaltelement 5 und mit entsprechenden Erfassungsgeräten wirkverbundenen Steuereinrichtung verwirklicht werden kann, ist auch ein manuelles Umschalten des Schutzsystems 4 durch den Fahrer über ein fahrzeugseitiges Bedienelement bei Verlassen des öffentlichen Fahrbereichs und Einfahrt in einen nichtöffentlichen Fahrbereich, in dem durch Unterweisung oder andere technische Maßnahmen ein Berühren des Fahrzeugs von außen durch Dritte ausgeschlossen ist, möglich. Auch ein Umschalten des Schutzsystems 4 durch Dritte, beispielsweise bei Fahrten in definierten Bereichen, bei verschiedenen Fahrleitungsanlagen oder bei Unfällen, ist über eine fernbetätigbare Bedieneinrichtung möglich.

Das Schaltelement 5 kann auch eine neutrale Mittelstellung C aufweisen, in der weder die erste Schutzstufe A noch die zweite Schutzstufe B des Schutzsystems 4 geschaltet ist. In dieser Mittelstellung C können Isolationsfehler auf der Seite des Antriebssystems aufgefunden werden. Außerdem dient die Mittelstellung C des Schaltelements 5 dazu, das Spannungsniveau auf der Antriebssystemseite an das der Fahrleitung 3 anzupassen, um einen Spannungssprung bei Schalten des Schaltelements 5 in die erste oder zweite Schutzstufe A oder B zu verhindern.

Erfindungsgemäß können Gleichspannungswandler 8 eingesetzt werden, die nicht die volle Nennleistung des gesamten Antriebssystems aufweisen, um die Spannung aus der Fahrleitung 3 in den Traktionsantrieb 1 zu übertragen. Solche Gleichspannungswandler wären - wenn überhaupt erhältlich - sehr groß, schwer und teuer, sehr umständlich in das Fahrzeug zu integrieren und bei der dann erforderlichen dauerhaften Nutzung durch Effizienzverluste von mindestens 5 % gekennzeichnet. Alternativ müsste der gesamte Antriebsstrang, inklusive Dieselaggregat, Getriebe, Wellen, etc., doppelt isoliert aufgebaut werden, was mit erheblichem Aufwand verbunden wäre.

Insgesamt liegt ein Kern der Erfindung in der betriebszustandsspezifischen und damit indirekt leistungsabhängigen Änderung des Schutzsystems 4. Die zum Beispiel geschwindigkeitsabhängige Umschaltung des Schutzsystems 4 trägt der Risikobewertung unter Berücksichtigung elektrischer und mechanischer Gefährdungen dahingehend Rechnung, dass das von einer Berührung des Fahrzeuges von außen ausgehende Gesamtrisiko ab einer gewissen Fahrgeschwindigkeit unabhängig vom Schutzsystem 4 ist. Mit dem erfindungsgemäßen Schutzsystem 4 kann ein sicherer Betrieb der Fahrzeuge ohne elektrische Gefährdungen der Fahrzeugfahrer oder Dritter in allen Antriebsarten, das heißt im Hybridmodus ohne Kontakt zu einer Fahrleitungsanlage beziehungsweise im elektrischen Modus mit kontinuierlichem Kontakt zu einer Fahrleitungsanlage, und bei allen Fahrgeschwindigkeiten einschließlich einem Stillstand gewährleisten. Das erfindungsgemäße Schutzsystem 4 ist darüber hinaus für andere Hybridfahrzeuge oder rein elektrisch betriebene, nicht spurgeführte Fahrzeuge mit externer kontinuierlicher Energieversorgung über eine Fahrleitung verwendbar.

## Patentansprüche

1. Fahrzeug, umfassend einen von einem nicht geerdeten Fahrzeugrahmen getragenen, elektrischen oder hybrid-elektrischen Traktionsantrieb (1), einen mit dem Traktionsantrieb (1) elektrisch verbindbaren Stromabnehmer (2), der zur Einspeisung von Traktionsenergie mit einer Fahrleitung (3) einer geerdeten Fahrleitungsanlage in galvanischen Kontakt bringbar ist, und ein elektrisches Schutzsystem (4) zur Vermeidung von gefährlichen Berührungsspannungen am Fahrzeugrahmen oder an einem mit diesem leitend verbundenen Fahrzeugteil, wobei das Schutzsystem (4) eine zweite Schutzstufe (B), die durch eine elektrisch einfach isolierte Montage wenigstens des Traktionsantriebes (1) am Fahrzeugrahmen gebildet ist, und eine erste Schutzstufe (A), die zusätzlich durch einen zwischen Stromabnehmer (2) und Traktionsantrieb (1) geschalteten, galvanisch trennenden Gleichspannungswandler (8) gebildet ist, sowie ein Schaltelement (5) aufweist, mittels dessen das Schutzsystem (4) durch wahlweises Zuschalten oder Überbrücken des Gleichspannungswandlers (8) zwischen der ersten und der zweiten Schutzstufe (A, B) umschaltbar ist, wobei die erste Schutzstufe (A) eine höhere Sicherheit vor gefährlichen Berührungsspannungen als die zweite Schutzstufe (B) bietet, und wobei der Traktionsantrieb (1) in beiden Schutzstufen (A, B) mit Traktionsenergie aus der Fahrleitung (3) versorgbar ist.

2. Fahrzeug nach Anspruche 1, wobei das Schutzsystem (4) eine Sensoreinrichtung zur Erfassung eines Betriebszustands des Fahrzeugs sowie eine mit der Sensoreinrichtung und dem Schaltelement (5) zusammenwirkende Steuereinrichtung aufweist, die dazu ausgebildet ist, das Schaltelement (5) automatisch in Abhängigkeit des erfassten Betriebszustandes zu betätigen.

3. Fahrzeug nach Anspruch 2, wobei die Sensoreinrichtung ein Geschwindigkeitsmessgerät zur Erfassung der Fahrgeschwindigkeit des Fahrzeugs aufweist, und wobei ein der ersten Schutzstufe (A) zugeordneter, erster Betriebszustand durch Fahrgeschwindigkeiten bis zu einem vorgebbaren Schwellenwert, während ein der zweiten Schutzstufe (B) zugeordneter, zweiter Betriebszustand durch Fahrgeschwindigkeiten ab dem Schwellwert definiert ist.

4. Fahrzeug nach Anspruch 2 oder 3, wobei die Sensoreinrichtung ein Strommessgerät zur Erfassung der Stromstärke eines sich bei Energieeinspeisung aus der Fahrleitung (3) ausbildenden Fahrstromes aufweist, und wobei ein der ersten Schutzstufe (A) zugeordneter, erster Betriebszustand durch Fahrströme bis zu einem vorgebbaren Schwellenwert, während ein der zweiten Schutzstufe (B) zugeordneter, zweiter Betriebszustand durch Fahrströme ab dem Schwellwert definiert ist.

5. Fahrzeug nach einem der Ansprüche 2 bis 4, wobei die Sensoreinrichtung einen Türschließsensor zur Erfassung des Schließzustandes einer Fahrzeugtür und/oder einen Sitzbelegungssensor zur Erfassung des Belegungszustandes eines Fahrzeugsitzes und/oder einen Gurtschließsensor zur Erfassung des Schließzustandes eines Sicherheitsgurtes des Fahrzeugsitzes aufweist, wobei in Abgrenzung eines der ersten Schutzstufe (A) zugeordneten, ersten Betriebszustandes ein der zweiten Schutzstufe (B) zugeordneter, zweiter Betriebszustand durch eine von innen geschlossene Fahrzeugtür und/oder einen belegten Fahrzeugsitz und/oder einen geschlossenen Sicherheitsgurt des Fahrersitzes definiert ist.

6. Fahrzeug nach einem der Ansprüche 1 bis 5, wobei das Schaltelement (5) mittels eines fahrzeugseitigen Bedienelementes manuell betätigbar und/oder mittels einer Kommunikationseinrichtung zur drahtlosen Datenübertragung und einer mit dieser zusammenwirkenden Bedieneinrichtung fernbetätigbar ist.

7. Fahrzeug nach einem der Ansprüche 1 bis 6, mit einem elektrischen Energiespeicher (11) zur Traktionsversorgung des Traktionsantriebs (1), wobei der Energiespeicher (11) bei zugeschaltetem Gleichspannungswandler (8) aus der Fahrleitung (3) aufladbar ist.

8. Fahrzeug nach einem der Ansprüche 1 bis 7, mit einer Überwachungseinrichtung (12) zur Erfassung und Signalisierung von Isolationsfehlern in der Isolation (6, 7) zwischen Traktionsantrieb (1) und Fahrzeugrahmen.

9. Fahrzeug nach einem der Ansprüche 1 bis 8, wobei das Schaltelement (5) eine neutrale Mittelstellung (C) aufweist, in der weder die erste noch die zweite Schutzstufe (A, B) des Schutzsystems (4) geschaltet ist.

## Claims

1. Vehicle, comprising an electric or hybrid-electric traction drive (1) supported by an ungrounded vehicle frame, a current collector (2) which can be electrically connected to the traction drive (1) and which can be brought into galvanic contact with a contact line (3) of a grounded contact line system to supply traction energy, and an electrical protection system (4) for preventing dangerous contact voltages on the vehicle frame or on a vehicle part conductively connected thereto, wherein the protection system (4) has a second protection stage (B), which is constituted by electrically single-insulated mounting at least of the traction drive (1) on the vehicle frame, and a first protection stage (A), which is additionally constituted by an electrically isolating DC-DC converter (8) which is connected between current collector (2) and traction drive (1), and has a switching element (5) by means of which the protection system (4) can be switched between the first and the second protection stage (A, B) through the optional connection in circuit or bypassing of the DC-DC converter (8), wherein the first protection stage (A) provides a higher degree of safety from dangerous contact voltages than the second protection stage (B), and wherein the traction drive (1) can be supplied with traction energy from the contact line (3) in both protection stages (A, B).

2. Vehicle according to claim 1, wherein the protection system (4) has a sensor device for detecting an operating state of the vehicle and, interoperating with the sensor device and the switching element (5), a control device which is designed to automatically actuate the switching element (5) depending on the operating state detected.

3. Vehicle according to claim 2, wherein the sensor device has a speed measuring instrument for detecting the running speed of the vehicle, and wherein a first operating state assigned to the first protection stage (A) is defined by running speeds up to a predefinable threshold value, whereas a second operating state assigned to the second protection stage (B) is defined by running speeds above the threshold value.

4. Vehicle according to claim 2 or 3, wherein the sensor device has a current measuring instrument for measuring the intensity of a traction current arising from energy supplied from the contact line (3), and wherein a first operating state assigned to the first protection stage (A) is defined by traction currents up to a predefinable threshold value, whereas a second operating state assigned to the second protection stage (B) is defined by traction currents above the threshold value.

5. Vehicle according to one of claims 2 to 4, wherein the sensor device has a door close sensor for detecting if a vehicle door is closed and/or a seat occupancy sensor for detecting if a vehicle seat is occupied and/or a seat belt sensor for detecting if a vehicle seat belt is buckled, wherein in contradistinction to the first operating state assigned to the first protection stage (A), a second operating state assigned to the second protection stage (B) is defined by a vehicle door closed from the inside and/or an occupied vehicle seat and/or a buckled driver seat belt.

6. Vehicle according to one of claims 1 to 5, wherein the switching element (5) can be manually actuated by means of an on-board operator control element and/or can be remotely actuated by means of a communication device for wireless data transmission and an operator control device interoperating therewith.

7. Vehicle according to one of claims 1 to 6, having an electrical energy store (11) for traction supply of the traction drive (1), wherein the energy store (11) can be charged from the contact line (3) when the DC-DC converter (8) is connected in circuit.

8. Vehicle according to one of claims 1 to 7, having a monitoring device (12) for detecting and indicating insulation faults in the insulation (6, 7) between traction drive (1) and vehicle frame.

9. Vehicle according to one of claims 1 to 8, wherein the switching element (5) has a neutral mid-position (C) in which neither the first nor the second protection stage (A, B) of the protection system (4) is selected.

## Revendications

1. Véhicule comprenant un entraînement ( 1 ) de traction, électrique ou électrique hybride, porté par un châssis de véhicule non mis à la terre, un appareil ( 2 ) de prise de courant pouvant être relié électriquement à l'entraînement ( 1 ) de traction et pouvant, pour injecter de l'énergie de traction, être mis en contact galvanique avec une ligne ( 3 ) de contact d'une caténaire mise à la terre et un système ( 4 ) de protection électrique pour empêcher l'apparition de tensions de contact dangereuses sur le châssis du véhicule ou sur une partie du véhicule reliée de manière conductrice à celui-ci, dans lequel le système ( 4 ) de protection a un deuxième étage ( B ) de protection, formé d'un montage isolé simplement électriquement au moins de l'entraînement ( 1 ) de traction sur le châssis du véhicule, et un premier étage ( A ) de protection, formé supplémentairement d'un convertisseur ( 8 ) de tension continue, séparant galvaniquement et monté entre l'appareil de prise de courant et l'entraînement ( 1 ) de traction, ainsi qu'un élément ( 5 ) de commutation au moyen duquel le système ( 4 ) de protection peut, par, au choix, connexion ou court-circuitage du convertisseur ( 8 ) de tension continue, être commuté entre le premier et le deuxième étages ( A, B ) de protection, le premier étage ( A ) de protection offrant une sécurité plus grande vis-à-vis de tensions de contact dangereuses que le deuxième étage ( B ) de protection et l'entraînement ( 1 ) de traction pouvant, dans les deux étages ( A, B ) de protection, être alimenté en énergie de traction à partir de la ligne ( 3 ) de contact.

2. Véhicule suivant la revendication 1, dans lequel le système ( 4 ) de protection a un dispositif capteur, pour détecter un état de fonctionnement du véhicule, ainsi qu'une dispositif de commande, coopérant avec le dispositif capteur et l'élément ( 5 ) de commutation, et constituée de manière à actionner l'élément ( 5 ) de commutation automatiquement en fonction de l'état de fonctionnement détecté.

3. Véhicule suivant la revendication 2, dans lequel le dispositif capteur a un appareil de mesure de la vitesse, pour détecter la vitesse de déplacement du véhicule et dans lequel un premier état de fonctionnement, associé au premier étage ( A ) de protection, est défini par des vitesses de déplacement jusqu'à une valeur de seuil pouvant être donnée à l'avance, tandis qu'un deuxième état de fonctionnement associé au deuxième étage ( B ) de protection, est défini par des vitesses de déplacement à partir de la valeur de seuil.

4. Véhicule suivant la revendication 2 ou 3, dans lequel le dispositif capteur a un appareil de mesure du courant, pour la détection de l'intensité d'un courant de traction se formant lors de l'injection d'énergie à partir de la ligne ( 3 ) de contact et dans lequel un premier état de fonctionnement, associé au premier étage ( A ) de protection, est défini par des courants de traction allant jusqu'à une valeur de seuil pouvant être donnée à l'avance, tandis qu'un deuxième état de fonctionnement, associé au deuxième étage ( B ) de protection, est défini par des courants de traction à partir de la valeur de seuil.

5. Véhicule suivant l'une des revendications 2 à 4, dans lequel le dispositif capteur a un capteur de fermeture de porte, pour la détection de l'état de fermeture d'une porte du véhicule et/ou un capteur d'occupation de siège, pour la détection de l'état d'occupation d'un siège du véhicule et/ou un capteur de fermeture de ceinture, pour la détection de l'état de fermeture d'une ceinture de sécurité du siège du véhicule, dans lequel, à la limite d'un premier état de fonctionnement associé au premier étage ( A ) de protection, un deuxième état de fonctionnement associé au deuxième étage ( B ) de protection, est défini par une porte du véhicule fermée de l'intérieur et/ou un siège du véhicule occupé et/ou d'une ceinture de sécurité fermée du siège du conducteur.

6. Véhicule suivant l'une des revendications 1 à 5, dans lequel l'élément ( 5 ) de commutation peut être actionné manuellement au moyen d'un élément de commande du côté du véhicule et/ou peut être actionné à distance au moyen d'un dispositif de communication, pour le transfert de données sans fil et d'un dispositif de commande coopérant avec celui-ci.

7. Véhicule suivant l'une des revendications 1 à 6, comprenant un accumulateur ( 11 ) d'énergie électrique, pour l'alimentation de l'entraînement ( 1 ) de traction, l'accumulateur ( 11 ) d'énergie pouvant, lorsque le convertisseur ( 8 ) de tension continue est connecté, être chargé à partir de la ligne ( 3 ) de contact.

8. Véhicule suivant l'une des revendications 1 à 7, comprenant un dispositif ( 12 ) de contrôle, pour la détection et la signalisation de défaut d'isolation dans l'isolation ( 6, 7 ), entre l'entraînement ( 1 ) de traction et le châssis du véhicule.

9. Véhicule suivant l'une des revendications 1 à 8, dans lequel l'élément ( 5 ) de commutation a un point ( C ) médian neutre, dans lequel, ni le premier, ni le deuxième étage ( A, B ) de protection du système ( 4 ) de protection, n'est connecté.
